# EUROPEAN PATENT APPLICATION

(11) **EP 3 597 582 A1**
(43) Date of publication of application: **22.01.2020**
(21) Application number: 19165328.6
(22) Date of filing: 26.03.2019
(51) Int. Cl.: B66B 5/02

(54) **UNINTERRUPTED RESCUE OPERATION**

(30) Priority: 26.03.2018 US 201815935753
(71) Applicant: Otis Elevator Company, Farmington, Connecticut 06032 (US)
(72) Inventor: LOTFI, Amir, Redondo Beach, CA California 90278 (US); NAGARAJAN, Prasanna, Farmington, CT Connecticut 06032 (US); KIM, HanJong, Farmington, CT Connecticut 06032 (US)
(74) Representative: Dehns

(57) **Abstract**

A method of operating an elevator system including: controlling, using a controller, a plurality of components of the elevator system, controlling includes operating at least one of an internal power source, an elevator car, a drive unit, a power conversion device, and a brake; detecting when an external power source is unavailable; deactivating the power conversion device when external power source is unavailable; determining at least one of a motoring mode and a near balance mode; connecting to an internal power source when at least one of the motoring mode and the near balance mode is determined; activating the power conversion device when at least one of the motoring mode and the near balance mode is determined; and increasing, using the internal power source, voltage of the drive unit, the internal power source is configured to provide an uninterrupted power to drive unit when the external power source is unavailable.

## Description

### CROSS-REFERENCE TO RELATED APPLICATIONS

This application is a Continuation-in-Part of US Application No. 15/090,843 filed April 5, 2016, which is incorporated herein by reference in its entirety.

### BACKGROUND

The subject matter disclosed herein relates generally to the field of systems powered by external power, and specifically to a method and apparatus for bringing a system to a controlled stop when power from an external power source is unavailable.

Traditionally, elevator systems have been dependent on an external power source for operation, which complicates operation in the event that the external power source is unavailable.

### BRIEF SUMMARY

According to one embodiment, a method of operating an elevator system is provided. The method including: controlling, using a controller, a plurality of components of the elevator system, controlling includes operating at least one of an internal power source, an elevator car, a drive unit, a power conversion device, and a brake; detecting, using the controller, when an external power source is unavailable; deactivating, using the controller, the power conversion device when an external power source is unavailable; determining, using the controller, a mode of the elevator car, the mode includes at least one of a motoring mode and a near balance mode; connecting, using the controller, to an internal power source when at least one of the motoring mode and the near balance mode is determined; activating, using the controller, the power conversion device when at least one of the motoring mode and the near balance mode is determined; and increasing, using the internal power source, voltage of the drive unit, the internal power source is configured to provide an uninterrupted power to the drive unit when the external power source is unavailable.

In addition to one or more of the features described above, or as an alternative, further embodiments may include: determining, using the controller, a run profile of the elevator car; and operating, using the controller, the elevator car in response to the run profile determined.

In addition to one or more of the features described above, or as an alternative, further embodiments may include: determining, using the controller, a projected stop position and a projected stop velocity of the elevator car; and commanding, using the controller, the brake to stop the elevator car when the projected stop position is within a selected stop position range and the projected stop velocity is within a selected stop velocity range.

In addition to one or more of the features described above, or as an alternative, further embodiments may include: determining, using the controller, a projected stop position and a projected stop velocity of the elevator car; determining, using the controller, a run profile of the elevator car, when the projected stop position is not within a selected stop position range or the projected stop velocity is not within a selected stop velocity range; and operating, using the controller, the elevator car in response to the run profile determined.

In addition to one or more of the features described above, or as an alternative, further embodiments may include that the internal power source is a 48 volt system.

In addition to one or more of the features described above, or as an alternative, further embodiments may include that the internal power source is a direct current system.

In addition to one or more of the features described above, or as an alternative, further embodiments may include that the internal power source includes at least one of a battery, a capacitor, and an auxiliary generator.

According to another embodiment, a method of operating an elevator system is provided. The method including: controlling, using a controller, a plurality of components of the elevator system, controlling includes operating at least one of an internal power source, an elevator car, a drive unit, a power conversion device, and a brake; detecting, using the controller, when an external power source is unavailable; deactivating, using the controller, the power conversion device when an external power source is unavailable; determining, using the controller, a mode of the elevator car, the mode includes a regenerative mode; determining, using the controller, a run profile of the elevator car when the regenerative mode is determined; and operating, using the controller, the elevator car in response to the run profile determined.

In addition to one or more of the features described above, or as an alternative, further embodiments may include: connecting, using the controller, to an internal power source, when the regenerative mode is detected; and charging, using the controller, the internal power source.

In addition to one or more of the features described above, or as an alternative, further embodiments may include: determining, using the controller, a projected stop position and a projected stop velocity of the elevator car; and commanding, using the controller, the brake to stop the elevator car when the projected stop position is within a selected stop position range and the projected stop velocity is within a selected stop velocity range.

In addition to one or more of the features described above, or as an alternative, further embodiments may include: determining, using the controller, a projected stop position and a projected stop velocity of the elevator car; and commanding, using the controller, the brake to stop the elevator car when the projected stop position is within a selected stop position range and the projected stop velocity is within a selected stop velocity range.

In addition to one or more of the features described above, or as an alternative, further embodiments may include: determining, using the controller, a projected stop position and a projected stop velocity of the elevator car; determining, using the controller, a run profile of the elevator car, when the projected stop position is not within a selected stop position range or the projected stop velocity is not within a selected stop velocity range; and operating, using the controller, the elevator car in response to the run profile determined.

In addition to one or more of the features described above, or as an alternative, further embodiments may include: determining, using the controller, a projected stop position and a projected stop velocity of the elevator car; determining, using the controller, a run profile of the elevator car, when the projected stop position is not within a selected stop position range or the projected stop velocity is not within a selected stop velocity range; and operating, using the controller, the elevator car in response to the run profile determined.

According to another embodiment an apparatus for operating an elevator system is provided. The apparatus including: an internal power source; an elevator car; a drive unit; a power conversion device; a brake; and a controller to control a plurality of components of the elevator system, controlling includes operating at least one of the internal power source, the elevator car, the drive unit, the power conversion device, and the brake, the controller performs operations including: detecting when an external power source is unavailable; deactivating the power conversion device when an external power source is unavailable; and determining a mode of the elevator car, the mode includes at least one of a motoring mode and a near balance mode.

In addition to one or more of the features described above, or as an alternative, further embodiments may include that the operations further include: connecting to an internal power source, when at least one of the motoring mode and the near balance mode is determined; activating the power conversion device when at least one of the motoring mode and the near balance mode is determined; and increasing voltage of drive unit via the internal power source, the internal power source is configured to provide an uninterrupted power to the drive unit when the external power source is unavailable.

In addition to one or more of the features described above, or as an alternative, further embodiments may include that the operations further include: determining a run profile of the elevator car; and operating the elevator car in response to the run profile determined.

In addition to one or more of the features described above, or as an alternative, further embodiments may include that the operations further include: determining a run profile of the elevator car when the regenerative mode is determined; and operating the elevator car in response to the run profile determined.

In addition to one or more of the features described above, or as an alternative, further embodiments may include that the operations further include: connecting to an internal power source, when the regenerative mode is detected; and charging the internal power source.

In addition to one or more of the features described above, or as an alternative, further embodiments may include that the operations further include: determining a projected stop position and a projected stop velocity of the elevator car; and commanding the brake to stop the elevator car when the projected stop position is within a selected stop position range and the projected stop velocity is within a selected stop velocity range.

In addition to one or more of the features described above, or as an alternative, further embodiments may include that the operations further include: determining a projected stop position and a projected stop velocity of the elevator car; and commanding the brake to stop the elevator car when the projected stop position is within a selected stop position range and the projected stop velocity is within a selected stop velocity range.

Technical effects of embodiments of the present disclosure include an elevator system having a controller to bring an elevator car to a controlled stop when power from an external power source is unavailable. Further technical effects include that the controller detects the operating mode of the elevator car, switches to an internal power source as needed and adjusts the car velocity accordingly.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The foregoing and other features, and advantages of the disclosure are apparent from the following detailed description taken in conjunction with the accompanying drawings in which like elements are numbered alike in the several FIGURES:
FIG. 1 illustrates a schematic view of an elevator system, in accordance with an embodiment of the disclosure;
FIG. 2 is a block diagram of the elevator system of FIG. 1, in accordance with an embodiment of the disclosure; and
FIG. 3 is a flow chart of an uninterrupted rescue operation of the elevator system of FIG. 1, in accordance with an embodiment of the disclosure.

### DETAILED DESCRIPTION

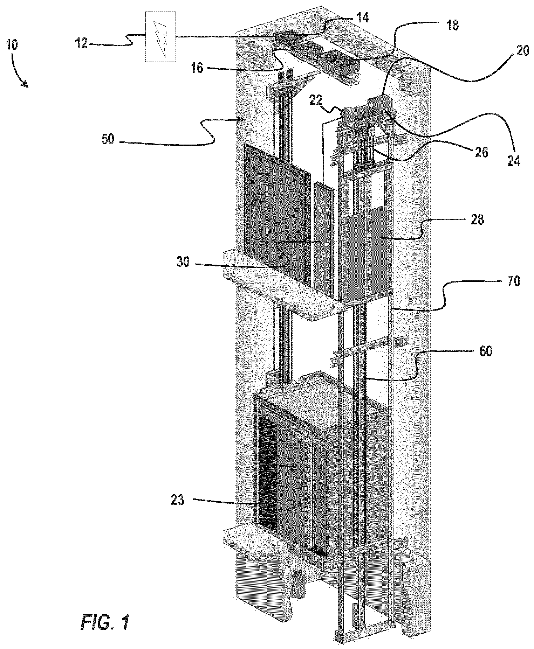

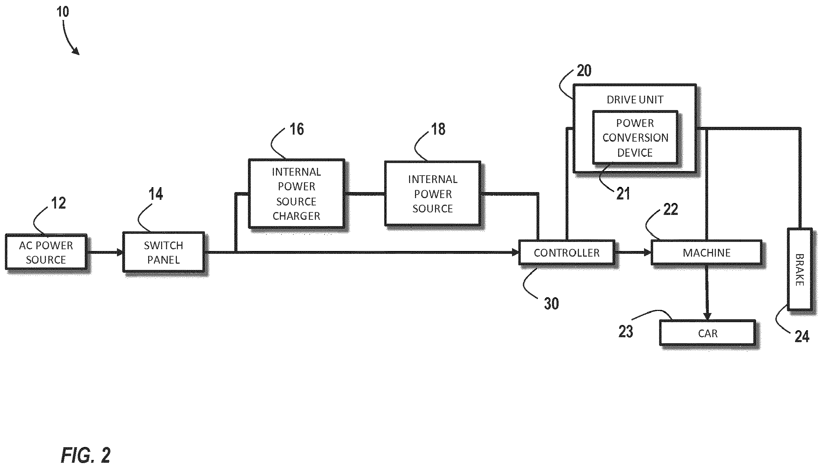

Referring now to FIGs. 1 and 2. FIG. 1 shows a schematic view of an elevator system 10, in accordance with an embodiment of the disclosure. FIG. 2 shows a block diagram of the elevator system 10 of FIG. 1, in accordance with an embodiment of the disclosure. The elevator system 10 includes an elevator car 23 configured to move vertically upward and downward within a hoistway 50 along a plurality of car guide rails 60. The elevator system 10 also includes a counterweight 28 operably connected to the elevator car 23 via a pulley system 26. The counterweight 28 is configured to move vertically upward and downward within the hoistway 50. The counterweight 28 moves in a direction generally opposite the movement of the elevator car 23, as is known in conventional elevator systems. Movement of the counterweight 28 is guided by counterweight guide rails 70 mounted within the hoistway 50.

The elevator system 10 also includes an alternating current (AC) external power source 12, such as an electrical main line (e.g., 230 volt, single phase). The AC power is provided from the AC external power source 12 to a switch panel 14, which may include circuit breakers, meters, etc. From the switch panel 14, the AC power may be provided directly to the drive unit 20 through the controller 30 or to an internal power source charger 16, which converts the AC power to direct current (DC) power to charge an internal power source 18 that requires charging. For instance, an internal power source 18 that requires charging may be a battery, capacitor, or any other type of power storage device known to one of ordinary skill in the art. The battery may be a lead-acid, lithium ion or other type of battery. Alternatively, the internal power source 18 may not require charging from the AC external power source 12 and may be a device such as, for example a gas powered generator, solar cells, hydroelectric generator, wind turbine generator or similar power generation device. The internal power source 18 is a part of a low voltage architecture (LVA) system configured to provide an uninterruptible power supply against a short term disturbance of the AC external power source 12 The LVA system is configured to provide an uninterrupted safety chain. In an embodiment, the internal power source 18 is a 48V system. The internal power source 18 may be an alternating current system and/or a direct current system. The internal power source 18 may be at least one of a battery, a capacitor, and an auxiliary generator. The internal power source 18 is configured to provide an uninterruptible power supply to a DC bus, convertor, or inverter in the middle of a drive assisted emergency stop smooth stop as described in patent as described patent application 15/178,608, which is incorporated herein by reference in its entirety. Advantageously, the extra power supplied by internal power source 18 allows the drive assisted emergency stop smooth stop operation to occur over longer distances and arrive at a destination floor with a higher success rate. In an embodiment, the internal power source 18 is configured to provide an uninterrupted power to the drive unit 20 when the external power source 12 is unavailable

The internal power source 18 may power various components of the elevator system 10 when an external power source (e.g. AC external power source 12) is unavailable. In an embodiment, the internal power source 18 may be used to power critical electrical components including, the controller, the drive system, and safety chain. The Safety chain monitors the status of various safety critical components inside elevator system 10 including car/landing door, terminal, buffer, etc.

If the internal power source 18 is generating an AC current, the AC power flows through the controller 30 to a drive unit 20. The drive unit 20 contains a power conversion device 21 that includes an inverter and a converter. The power conversion device 21 may invert the AC to DC power from the internal power source 18 and back to AC drive signals. The drive unit 20 drives a machine 22 to impart motion to the elevator car 23 via a traction sheave of the machine 22. The AC drive signals may be multiphase (e.g., three-phase) drive signals for a three-phase motor in the machine 22. The machine 22 also includes a brake 24 that can be activated to stop the machine 22 and elevator car 23.

The power conversion device 21 within the drive unit 20 converts AC or DC power from internal power source 18 to AC power for powering various components of the elevator system 10 and may drive the machine 22 in motoring mode if necessary. Motoring mode refers to situations where the machine 22 is drawing current from the drive unit 20. Motoring mode may occur when an empty elevator car is traveling downwards or a loaded elevator car is traveling upwards due to a weight imbalance between the elevator car 23 and the counterweight 28. The power conversion device 21 of the drive unit 20 also converts AC power from machine 22 to DC power and back to AC or DC for optionally charging internal power source 18 when operating in regenerative mode. Regenerative mode refers to situations where the drive unit 20 receives current from the machine 22 (which acts as a generator) and supplies current back to the AC external power source 12 and/or the internal power source 18. Regenerative mode may occur when an empty elevator car is traveling upwards or when a loaded elevator car is traveling downwards due to a weight imbalance between the elevator car 23 and the counterweight 28. There is also a near balance mode when the weight of the elevator car 23 is about balanced with the weight of the counterweight 28. Near balance mode operates similarly to motoring mode because the machine 22 is drawing current from the drive unit 20 to move the elevator car 23 out of the balance. As will be appreciated by those of skill in the art, motoring mode, regenerative mode, and near balance mode may occur in more than just the few examples described above and are within the scope of this disclosure.

The controller 30 is responsible for controlling the operation of the elevator system 10. The controller 30 may also determine a mode (motoring, regenerative, near balance) of the elevator car 23. The controller 30 may determine the mode of the elevator car 23 using the car direction and the weight distribution between the elevator car 23 and the counterweight 28. The modes may include at least one of a motoring mode, a near balance mode, and a regenerative mode, as previously described. The controller 30 may detect when the external power source 12 is unavailable. In the event the external power source 12 is unavailable, the controller 30 is responsible for determining a target floor and determining a run profile to meet that target floor. The controller 30 may adjust the velocity of the elevator car 23 to reach the target floor in response to the mode detected. The controller 30 may include a processor and an associated memory. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium. It is understood that the elevator system 10 and accompanying electrical structure shown in FIGs. 1 and 2 are utilized for exemplary illustration, and embodiments discussed herein may be applicable to other elevator systems.

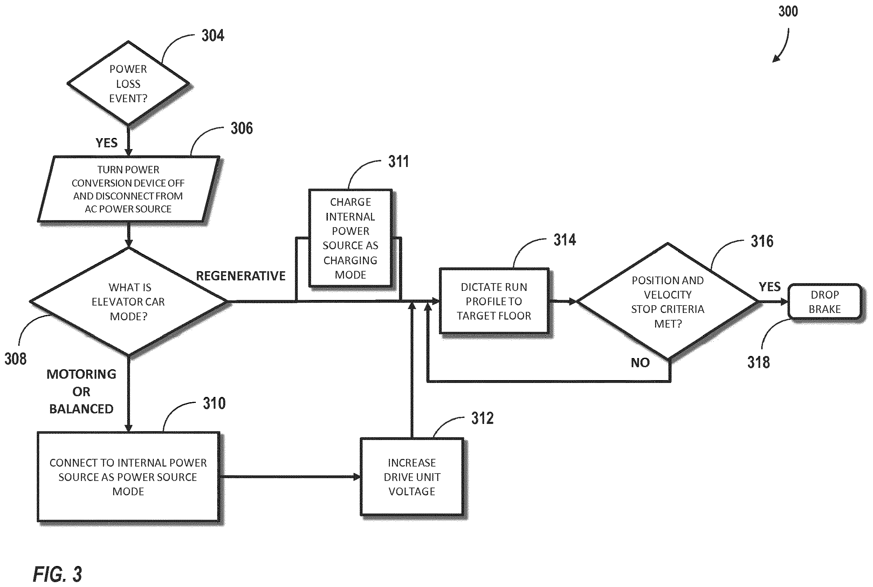

Referring now also to FIG. 3, which shows a block diagram of an uninterrupted rescue operation 300 of the elevator system 10 of FIG. 1, in accordance with an embodiment of the disclosure. The controller 30 may initiate the uninterrupted rescue operation 300 when the AC external power source 12 is unavailable at block 304. Once the AC external power source 12 is unavailable, the controller 30 may deactivate the power conversion device 21 and disconnected from the AC external power source 12 at block 306. Next at block 308, the controller 30 may determine the mode of the elevator car 23. The mode may include at least one of a motoring mode, a near balance mode, and a regenerative mode, as described earlier.

If at least one of the motoring mode and the near balance mode is determined, the controller may then connect to the internal power source 18 as power source mode at block 310 and the power conversion device 21 may be turned back on. At block 312, the voltage of the drive unit 20 may be increased via the internal power source 18. During power source mode, the elevator system 10 is drawing power from the internal power source 18 which is required for motoring/balanced elevator car 23 runs. The internal power source 18 may be used to power a plurality of components of the elevator system 10. Advantageously, depending on the size of the internal power source 18 this voltage increase may be strong enough to power the motoring of the elevator car 23 or may be just enough to supply power to various safety equipment such as for example brakes 24, safety chain, and communication sensors.

At block 308, if regenerative mode is detected the controller may use the electrical power generated by the elevator system 10 in regenerative mode to power a plurality of components of the elevator system 10. Additionally, if regenerative mode is detected, then the controller may also connect to the internal power source 18 in charging mode to recharge the internal power source 18 at block 311.

Next, as shown in FIG. 3, the motoring and near balance path will converge with the regenerative path at block 314, where the controller 30 dictates a run profile to a target floor. The process of dictating a run profile may include determining a run profile and operating the elevator car in response to the run profile determined. The run profile dictates a position, speed, and/or deceleration of the elevator car 23 to transition the elevator car 23 to a target floor. Then at block 316 the controller 30 will determine a projected stop position and a projected stop velocity of the elevator car 23 and drop the brake 24 at block 318 when the projected stop position is within a selected stop position range and the projected stop velocity is within a selected stop velocity range. If the projected stop position is not within a selected stop position range or the projected stop velocity is not within a selected stop velocity range the controller 30 will return back to block 314 to dictate a new run profile. The selected stop position range may refer to a safe location for rescue and/or egress from the elevator car 23 at a target floor. The selected stop velocity range may refer to a safe velocity of the elevator car 23 to approach the selected stop position location.

Advantageously, in the event of the external power becomes unavailable at block 304, the power is seamlessly transitioned from the AC external power source 12 to the internal power source 18 or in the case of regenerative mode, the power may be supplied by the elevator system 10 itself. This seamless transition allows the elevator car 23 to reach the target floor without interruption in all modes and also conserve internal power source 18 energy by only using it for certain modes.

The terminology used herein is for the purpose of describing particular embodiments only and is not intended to be limiting. While the description has been presented for purposes of illustration and description, it is not intended to be exhaustive or limited to embodiments in the form disclosed. Many modifications, variations, alterations, substitutions or equivalent arrangement not hereto described will be apparent to those of ordinary skill in the art without departing from the scope of the disclosure. Additionally, while the various embodiments have been described, it is to be understood that aspects may include only some of the described embodiments. Accordingly, the disclosure is not to be seen as limited by the foregoing description, but is only limited by the scope of the appended claims.

## Claims

1. A method of operating an elevator system, the method comprising:
controlling, using a controller, a plurality of components of the elevator system, wherein controlling comprises operating at least one of an internal power source, an elevator car, a drive unit, a power conversion device, and a brake;
detecting, using the controller, when an external power source is unavailable;
deactivating, using the controller, the power conversion device when an external power source is unavailable;
determining, using the controller, a mode of the elevator car, wherein the
mode includes at least one of a motoring mode and a near balance mode;
connecting, using the controller, to an internal power source when at least one of the motoring mode and the near balance mode is determined;
activating, using the controller, the power conversion device when at least one of the motoring mode and the near balance mode is determined; and
increasing, using the internal power source, voltage of the drive unit,
wherein the internal power source is configured to provide an uninterrupted power to the drive unit when the external power source is unavailable.

2. The method of claim 1, further comprising:
determining, using the controller, a run profile of the elevator car; and
operating, using the controller, the elevator car in response to the run profile determined.

3. The method of claim 1 or 2, further comprising:
determining, using the controller, a projected stop position and a projected stop velocity of the elevator car; and
commanding, using the controller, the brake to stop the elevator car when the projected stop position is within a selected stop position range and the projected stop velocity is within a selected stop velocity range.

4. The method of claim 1 or 2, further comprising:
determining, using the controller, a projected stop position and a projected stop velocity of the elevator car;
determining, using the controller, a run profile of the elevator car, when the projected stop position is not within a selected stop position range or the projected stop velocity is not within a selected stop velocity range; and
operating, using the controller, the elevator car in response to the run profile determined.

5. The method of any preceding claim, wherein the internal power source is a 48 volt system.

6. The method of any preceding claim, wherein the internal power source is a direct
current system.

7. The method of any preceding claim, wherein the internal power source includes at
least one of a battery, a capacitor, and an auxiliary generator.

8. A method of operating an elevator system, the method comprising:
controlling, using a controller, a plurality of components of the elevator system, wherein controlling comprises operating at least one of an internal power source, an elevator car, a drive unit, a power conversion device, and a brake;
detecting, using the controller, when an external power source is unavailable;
deactivating, using the controller, the power conversion device when an external power source is unavailable;
determining, using the controller, a mode of the elevator car, wherein the mode includes a regenerative mode;
determining, using the controller, a run profile of the elevator car when the regenerative mode is determined; and
operating, using the controller, the elevator car in response to the run profile determined.

9. The method of claim 8, further comprising:
connecting, using the controller, to an internal power source, when the regenerative mode is detected; and
charging, using the controller, the internal power source.

10. The method of claim 8 or 9, further comprising:
determining, using the controller, a projected stop position and a projected stop velocity of the elevator car; and
commanding, using the controller, the brake to stop the elevator car when the projected stop position is within a selected stop position range and the projected stop velocity is within a selected stop velocity range.

11. The method of claim 8 or 9, further comprising:
determining, using the controller, a projected stop position and a projected stop velocity of the elevator car;
determining, using the controller, a run profile of the elevator car, when the projected stop position is not within a selected stop position range or the projected stop velocity is not within a selected stop velocity range; and
operating, using the controller, the elevator car in response to the run profile determined.

12. An apparatus for operating an elevator system, the apparatus comprising:
an internal power source;
an elevator car;
a drive unit;
a power conversion device;
a brake; and
a controller to control a plurality of components of the elevator system,
wherein controlling comprises operating at least one of the internal power source, the elevator car, the drive unit, the power conversion device, and the brake,
wherein the controller performs operations comprising:
detecting when an external power source is unavailable;
deactivating the power conversion device when an external power source is unavailable; and
determining a mode of the elevator car, wherein the mode includes at least one of a motoring mode and a near balance mode.

13. The apparatus of claim 14, wherein the operations further comprise:
connecting to an internal power source, when at least one of the motoring
mode and the near balance mode is determined;
activating the power conversion device when at least one of the motoring mode and the near balance mode is determined; and
increasing voltage of drive unit via the internal power source,
wherein the internal power source is configured to provide an uninterrupted power to the drive unit when the external power source is unavailable.

14. The apparatus of claim 12 or 13, wherein the operations further comprise:
determining a run profile of the elevator car when the regenerative mode is determined; and
operating the elevator car in response to the run profile determined.

15. The apparatus of claim 12, 13 or 14 wherein the operations further comprise:
connecting to an internal power source, when the regenerative mode is detected; and
charging the internal power source.
